# EUROPÄISCHE PATENTSCHRIFT

(11) **EP 4 198 464 B1**
(45) Veröffentlichungstag und Bekanntmachung des Hinweises auf die Patenterteilung: **29.01.2025**
(21) Anmeldenummer: 21216108.7
(22) Anmeldetag: 20.12.2021
(51) Int. Cl.: G01G 19/03

(54) **FÖRDERBANDWAAGE MIT METALLDETEKTOR**
CONVEYOR BELT SCALE WITH METAL DETECTOR
BALANCE DE BANDE TRANSPORTEUSE POURVUE DE DÉTECTEUR DE MÉTAL

(43) Veröffentlichungstag der Anmeldung: 21.06.2023
(73) Patentinhaber: Bizerba SE & Co. KG, 72336 Balingen (DE)
(72) Erfinder: Kern, Thomas, 31134 Hildesheim (DE)
(74) Vertreter: Huber, Meik

(56) Entgegenhaltungen:
- EP-B1- 2 865 614
- DE-A1- 102020 113 024
- RU-C2- 2 583 346

## Beschreibung

Die vorliegende Erfindung betrifft eine Förderbandwaage zum Transport von Stückgut mit einem Zuführband, einem Wägeband und einem Abführband. Das Wägeband ist auf einer Wägezelle abgestützt, die das Gewicht von Stückgut erfasst, das über das Wägeband transportiert wird. Die Förderbandwaage umfasst einen Metalldetektor, der mindestens eine Senderspule und mindestens eine Empfängerspule umfasst.

Metalldetektoren werden in der Lebensmittelindustrie eingesetzt, um metallische Verunreinigungen in Lebensmitteln zu detektieren. Metallische Verunreinigungen kommen zum Beispiel zustande, wenn bei einer Fleischbearbeitungsmaschine ein Teil eines Bauteils abbricht und in die Lebensmittel fällt. So können sich während des Betriebs zum Beispiel kleinere Schrauben lösen oder kleine Bruchstücke zum Beispiel von einem Messer abbrechen. Diese Bruchstücke sind oft nur wenige Millimeter groß, zum Beispiel 2 mm bis 4 mm. Lebensmittel mit solchen Verunreinigungen müssen am Ende des Produktionsprozesses erkannt und aussortiert werden. So sind Förderbandwaagen oder Preisauszeichner zur Gewichtsprüfung und ggf. zum Auszeichnen von Verpackungen, zum Beispiel Trayschalen mit Lebensmitteln, oft auch mit einem Metalldetektor ausgerüstet. Diese Metalldetektoren arbeiten mit Röntgentechnologie oder mit einem Tunnel, der von einer kreisförmigen Spule gebildet wird, so dass das Lebensmittel mit dem Förderband senkrecht durch die Spule gefördert wird. Meist ist dies nur mit einem komplexen Aufbau möglich.

Ein derartiger Metalldetektor ist in der EP2865614B1 gezeigt. Eine Förderbandwaage umfasst ein Zuführband, welches durch einen Metalldetektor, der als Tunnel ausgebildet ist, hindurch führt.

Die RU2583346C2 zeigt einen Metalldetektor zur Erfassung eines metallischen Objekts, welches sich in einem anderen Gegenstand befindet. So kann zum Beispiel eine Wasser-, Strom- oder Gasleitung in einer Wand detektiert werden.

Die DE102020113024A1 zeigt einen Metalldetektor, der als Tunnel ausgebildet ist, durch den ein Förderband hindruch führt.

Aufgabe der Erfindung ist es, eine Förderbandwaage für Stückgut, insbesondere für Lebensmittel, die insbesondere in Trayschalen verpackt sind, zu schaffen, die einen auf einfache Weise integrierten Metalldetektor umfasst.

Diese Aufgabe wird erfindungsgemäß mit einer Förderbandwaage nach Anspruch 1 gelöst.

Erfindungsgemäß wird eine Förderbandwaage zum Transport von Stückgut, mit einem Zuführband, einem Wägeband und einem Abführband vorgeschlagen. Das Wägeband ist auf einer Wägezelle abgestützt, die das Gewicht von Stückgut erfasst, das über das Wägeband transportiert wird. Die Förderbandwaage umfasst einen Metalldetektor, der mindestens eine Senderspule und mindestens eine Empfängerspule umfasst. Die mindestens eine Senderspule und die mindestens eine Empfängerspule sind jeweils als eine planare Spule ausgeführt. Als planare Spule versteht der Fachmann insbesondere auch eine Spule mit nur einer Windung, dass heißt eine kreisförmig oder rechteckförmig ausgeführte Leiterstruktur, die nicht geschlossen ist, dessen beide Enden jedoch bis auf einen geringen Abstand aneinander geführt sind. Die planaren Spulen befinden sich jeweils in einer Ebene, die parallel zum Obertrum des Förderbandes und somit parallel zur Förderrichtung verläuft. Planare Spulen haben den Vorteil, dass sie relativ einfach, prozesssicher, günstig und toleranzarm gefertigt werden können.

In einer Ausführungsform ist mindestens eine planare Spule als Leiterstruktur auf einer Leiterplatte ausgeführt. In einer Ausführungsform sind alle planaren Spulen als Leiterstrukturen auf mindestens einer Leiterplatte ausgeführt. Auf einer Leiterplatte können die planaren Strukturen einfach mit einem bekannten Prozess hergestellt werden und annähernd beliebige Leiterstrukturen in einer Ebene gebildet werden. Die planare Spule ist in einer Metallisierungsebene der Leiterplatte gebildet.

In einer Ausführungsform umfasst die Förderbandwaage ein Förderband. Das Förderband umfasst einen Bandkörper, um den über anfangs- und endseitig montierte Umlenkrollen ein Förderband umlaufend geführt wird. Mindestens eine Spule des Metalldetektors ist in dem Bandkörper zwischen Obertrum und Untertrum des Förderbandes integriert.

In einer Ausführungsform sind alle Spulen des Metalldetektors in den Bandkörper zwischen Obertrum und Untertrum des Förderbandes integriert. Das hat den Vorteil, dass das Stückgut auf dem Obertrum des Förderbandes über die Spulen des Metalldetektors gleitet und im Förderbereich des Förderbandes keine weiteren Aufbauten notwendig sind.

In einer Ausführungsform ist eine Empfängerspule jeweils einer Senderspule elektrisch zugeordnet. Die der Senderspule zugeordnete Empfängerspule ist auf der gleichen Leiterplatte und im Wesentlichen im gleichen geometrischen Bereich der Leiterplatte, jedoch auf einer anderen Metallisierungsebene, angeordnet. In diesem Zusammenhang ist elektrisch zugeordnet so zu verstehen, dass die Empfängerspule eine magnetische Reaktion, welche durch die Senderspule in einem Metallgegenstand verursacht wird, detektiert. Auf einer Leiterplatte mit mehreren Metallisierungsebenen sind Senderspule und Empfängerspule sozusagen übereinander angeordnet. Dabei soll hierunter auch fallen, dass Senderspule und Empfängerspule zum Beispiel leicht zueinander verschoben, aber im Wesentlichen dennoch überlappend ausgeführt sind. Des Weiteren ist hierunter auch zu verstehen, dass Senderspule und Empfängerspule zueinander verdreht angeordnet sind.

In einer Ausführungsform sind die Hälfte der Spulen des Metalldetektors in den Bandkörper zwischen Obertrum und Untertrum des Förderbandes integriert. Die Hälfte der Spulen des Metalldetektors sind oberhalb des Obertrums und mit Abstand zum Obertrum Förderbandes angeordnet. Oberhalb des Obertrums ist so zu verstehen, dass zwischen Obertrum des Förderbandes und den Spulen genug freier Raum ist, dass das Stückgut unter den Spulen des Metalldetektors hindurchbefördert werden kann, jedoch die Spulen nahe genug am Förderband angeordnet sind, damit das Magnetfeld der Spulen mit dem Stückgut interagieren kann.

In einer Ausführungsform sind die Spulen, die innerhalb des Bandkörpers angeordnet sind und die Spulen, die oberhalb des Obertrums des Förderbandes angeordnet sind, in Transportrichtung im Wesentlichen auf gleicher Höhe angeordnet. Das heißt, in Transportrichtung betrachtet liegen die Spulen übereinander. Sind mehrere Spulen vorhanden, so sind zumindest einige davon senkrecht zur Transportrichtung nebeneinander angeordnet.

In einer Ausführungsform ist eine erste Anzahl von zwei oder mehr Spulen, insbesondere vier Spulen, im Bandkörper zwischen Obertrum und Untertrum des Förderbandes angeordnet. Die gleiche Anzahl von Spulen ist oberhalb des Obertrums des Bandkörpers angeordnet. Jeder Spule im Bandkörper zwischen Obertrum und Untertrum des Förderbandes ist eine Spule oberhalb des Obertrums des Bandkörpers elektrisch zugeordnet.

In einer Ausführungsform bestehen Senderspulen und/oder Empfängerspulen aus ausgedehnten elektrischen Leiterstrukturen. Diese sind insbesondere kreisförmig oder rechtechtförmig angeordnet. Diese sind insbesondere auf einer Leiterplatte angeordnet.

In einer Ausführungsform sind die Leiterstrukturen im Wesentlichen als eine Rechteckfunktion, insbesondere als eine regelmäßige Rechteckfunktion ausgebildet. Die Rechteckfunktion verläuft entlang einer Kreisbahn oder einer Rechteckbahn.

In einer Ausführungsform umfasst der Metalldetektor einen Signalgenerator, der ein Wechselstromsignal erzeugt. Das Wechselstromsignal wird der mindestens einen Senderspule zugeführt. Das der mindestens einen Senderspule zugeführte Wechselstromsignal erzeugt ein Magnetfeld. Das Magnetfeld induziert in einem zu detektierenden metallischen Gegenstand in einem Stückgut auf dem Förderband Wirbelströme. Beim Stückgut handelt es sich dabei um einen zu überprüfenden Gegenstand, zum Beispiel ein Lebensmittel. Der metallische Gegenstand ist zum Beispiel eine Verunreinigung im Lebensmittel, das eine Gefahr für einen Konsumenten darstellen kann und deshalb detektiert werden soll. Der Metalldetektor umfasst eine Signalauswerteeinrichtung. Die Signalauswerteeinrichtung detektiert ein, durch die Wirbelströme im metallischen Gegenstand in dem Stückgut erzeugtes Magnetfeld, welches durch die Empfängerspule empfangen wird.

In einer Ausführungsform erzeugt der Signalgenerator ein gepulstes Wechselstromsignal. Das heißt, der Signalgenerator erzeugt ein Wechselstromsignal, das periodisch an- und ausgeschaltet wird.

In einer Ausführungsform nimmt die Signalauswerteeinrichtung zum Zeitpunkt, in dem das gepulste Wechselstromsignal des Signalgenerators größer Null ist, keine Signalauswertung vor. Dies ist so zu verstehen, dass keine Signalauswertung vorgenommen wird, wenn die Senderspule ein Magnetfeld erzeugt. Dieses Magnetfeld der Senderspule würde due Signalauswertung der Signalauswerteeinrichtung stören. Dabei versteht der Fachmann, dass das Signal des Signalgenerators größer Null ist, wenn das Signal des Signalgenerators angeschaltet ist und gleich Null ist, wenn das Signal des Signalgenerator ausgeschaltet ist. Da aufgrund der praktischen Realisierung bei einem gepulsten Signal keine unendlich steilen Flanken möglich sind, versteht der Fachmann, dass Null als ein Schwellwert im Bereich einer sehr geringen Signalstärke zu verstehen ist.

In einer Ausführungsform sind die Senderspulen und die Empfängerspulen elektrisch gegeneinander abgeschirmt.

In einer Ausführungsform umfasst die Förderbandwaage eine Lichtschranke oder einen Abstandssensor zum Detektieren einer Verpackung im Detektionsbereich des Metalldetektors. Die Förderbandwaage umfasst eine Steuervorrichtung, die den Metalldetektor in einen aktiven Zustand versetzt, wenn die Lichtschranke oder der Abstandssensor ein auf der Förderbandwaage gefördertes Stückgut im Bereich des Metalldetektors erfasst.

Einige Ausführungsformen der Erfindung sind in den Zeichnungen beispielhaft gezeigt und nachfolgend beschrieben. Es zeigen, jeweils in schematischer Darstellung:
- Fig. 1: Förderbandwaage mit Metalldetektor nach dem Stand der Technik,
- Fig. 2: Förderband mit integriertem Metalldetektor nach einer ersten Ausführungsform,
- Fig. 3a: Leiterstruktur einer Spule nach einer ersten Ausführungsform,
- Fig. 3b: Leiterstruktur einer Spule nach einer zweiten Ausführungsform,
- Fig. 4: Förderband mit integriertem Metalldetektor nach einer zweiten Ausführungsform,
- Fig. 5: Leiterstruktur einer Spule nach einer dritten Ausführungsform.

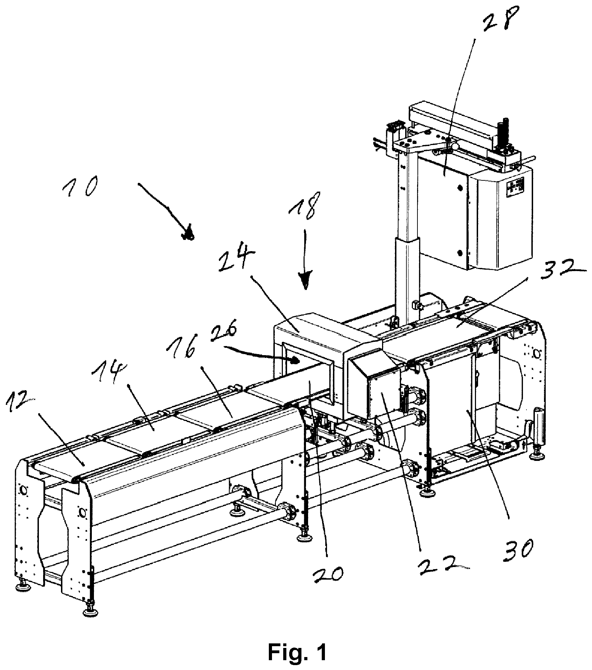

Fig. 1 zeigt eine Förderbandwaage 10 bestehend aus einem Zuführband 12, einem Wägeband 14, das auf einer Wägezelle abgestützt ist und einem Abführband 16. Dem Abführband 16 folgend befindet sich ein Metalldetektor 18, der ein Förderband 20 umfasst, welches Stückgut vom Abführband aufnimmt und stromabwärts transportiert. Dabei umfasst der Metalldetektor 18 ein Gehäuse 24, in dem sich eine nicht dargestellte Spulenanordnung befindet. Das Gehäuse 24 hat eine Durchgangsöffnung 26 für Stückgut und für das Förderband 20.

Das Stückgut wird auf dem Förderband 20 entlang der Förderrichtung durch die Durchgangsöffnung 26 des Gehäuses 24 transportiert. Die Spulenanordnung besteht aus in Förderrichtung hintereinander angeordneten Spulen, namentlich einer ersten Empfängerspule, darauf folgend einer Senderspule und darauf folgend einer zweiten Empfängerspule. Alle Spulen sind parallel zueinander angeordnet und bestehen aus kreisförmigen Wicklungen, die innerhalb des Gehäuses 24 angebracht sind. Die Spulen sind in einer Ebene senkrecht zur Förderrichtung ausgebildet. Jede Spule umschlingt die Durchgangsöffnung 26. Dabei umfassen die Spulen eine Vielzahl von Wicklungen aus einem metallischen Draht. Der Metalldetektor umfasst eine Steuervorrichtung 22, in dem die Signalgeneration für die Senderspule und die Signalverarbeitung von Signalen von den Empfängerspulen stattfindet. Dem Metalldetektor 18 folgend ist eine Druckerstation angebracht, die wiederum ein Förderband 32 umfasst und einen Top-Etikettierer 28 zum Etikettieren von Stückgut von oben und einen Bottom-Etikettierer 30 zum Etikettieren von Stückgut von unten umfasst.

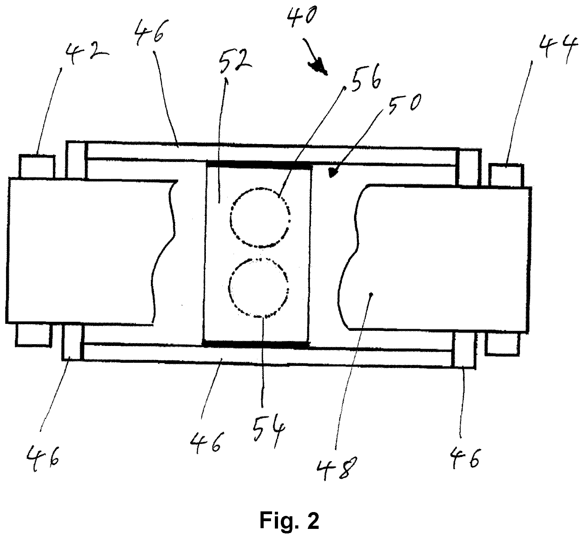

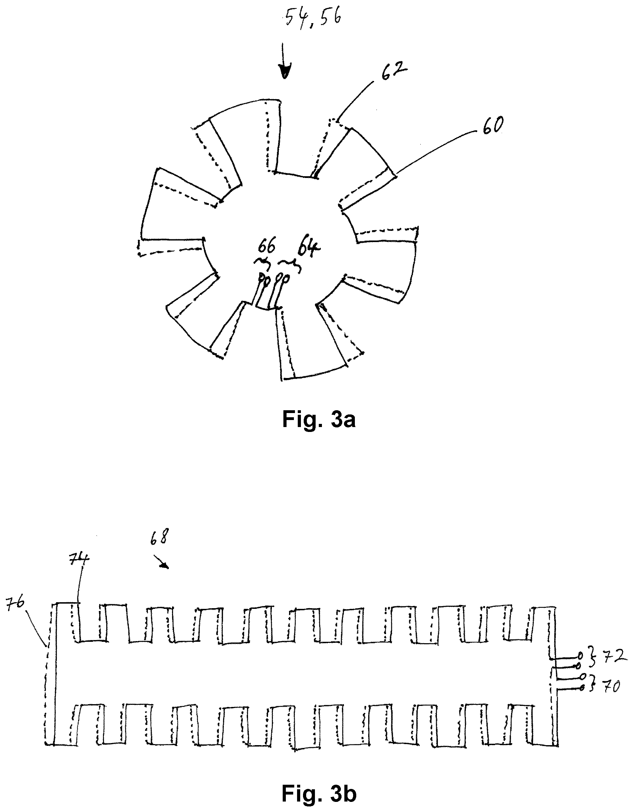

Fig. 2 zeigt ein Förderband 40 mit integriertem Metalldetektor nach einer ersten Ausführungsform der Erfindung. Dabei besteht das Förderband aus einem Bandkörper, der aus einem Rahmen 46 besteht. An beiden längsseitigen Enden des Rahmens 46, das heißt anfangsseitig und endseitig des Rahmens 46, sind Umlenkrollen 42, 44 angebracht, um die ein Förderband 48 umlaufend geführt wird. In Fig. 2 ist das Förderband 48 zur Veranschaulichung des Bereichs 50 innerhalb des Rahmens 46 unterbrochen. In der Realität ist das Förderband 48 jedoch geschlossen und kann somit endlos umlaufend um die Umlenkrollen 42, 44, von denen eine angetrieben ist, geführt werden. Auf dem Förderband 48 wird Stückgut in Transportrichtung, transportiert. In dem Bereich 50 innerhalb des Rahmens 46 ist quer zur Transportrichtung des Förderbandes 40 eine Leiterplatte 52 angebracht, die in diesem Fall zwei Spulen 54, 56 umfasst. Die Anzahl der Spulen 54, 56 ist abhängig von deren Größe und der Breite des Förderbandes 48. Es sind so viele Spulen 54, 56, insbesondere auf einer Geraden quer zur Transportrichtung angeordnet, dass die elektromagnetischen Felder der Spulen 54, 56 den Bereich über die ganze Breite des Förderbandes 48 komplett ausleuchten, so dass das auf dem Förderband 48 transportierte Stückgut komplett durchleuchtet wird. Die Spulen 54, 56 sind elektrisch mit der Steuervorrichtung 22 verbunden. Das Sendesignal jeder Spule 54, 56 wird in der Steuervorrichtung 22 generiert. Die Empfangssignale jeder Spule 54, 56 werden in der Steuervorrichtung 22 ausgewertet. Die Steuervorrichtung 22 umfasst einen Signalgenerator, der ein Wechselstromsignal erzeugt, welches der mindestens einen Senderspule 54, 56 zugeführt wird. Das der mindestens einen Senderspule 54, 56 zugeführte Wechselstromsignal erzeugt ein Magnetfeld, welches in einem zu detektierenden metallischen Gegenstand in einem Stückgut auf dem Förderband 48 Wirbelströme induziert. Die Steuervorrichtung 22 umfasst eine Signalauswerteeinrichtung, welche ein, durch die Wirbelströme im metallischen Gegenstand in dem Stückgut erzeugtes Magnetfeld, welches durch die Empfängerspule 54, 56 empfangen wird, detektiert und auswertet. Auf dem Rahmen 46 ist eine nicht gezeigte Platte, insbesondere einer Metallplatte angebracht, auf der das Förderband 48 gleitet und durch die das Förderband 48 abgestützt wird. Besteht diese Platte aus einem Material, das das elektromagnetische Feld der Spulen nicht stört, so kann die Platte durchgehend auch über der Leiterplatte 52 angebracht sein. Besteht die Platte aus einem Material, das das elektromagnetische Feld der Spulen stört, insbesondere aus Metall, so muss die Platte im Bereich der Spulen unterbrochen sein. Der in das Förderband 40 integrierte Metalldetektor umfasst nur eine Leiterplatte 52 unterhalb des Obertrums des Förderbandes 48 im Bereich 50 innerhalb des Rahmens 46. Auf dieser Leiterplatte 52 sind Senderspulen und Empfängerspulen als Leiterstrukturen ausgeführt, wie in Fig. 3a und Fig. 3b in einer ersten und in einer zweiten Ausführungsform gezeigt.

Fig. 3a zeigt eine Leiterstruktur einer Spule 54, 56, die sowohl als Senderspule 62 als auch als Empfängerspule 60 dient. Dabei sind zwei ähnliche Leiterstrukturen elektrisch voneinander isoliert angeordnet, die die gleiche oder eine ähnliche Kontur aufweisen. Elektrisch voneinander isoliert sind diese Leiterstrukturen, indem sie auf einer Leiterplatte 52 mit mehreren Metallisierungsebenen auf unterschiedlichen Metallisierungsebenen angeordnet sind. In Fig. 3a zeigt die Leiterstruktur 60, die mit der durchgezogenen Linie gezeichnet ist, die oberste Metallisierungsebene. Das ist die Empfängerspule 60. Die Leiterstruktur 62, die mit der gestrichelten Linie gezeichnet ist, zeigt eine Leiterstruktur auf einer darunterliegenden Metallisierungsebene. Das ist die Senderspule 62. Grundsätzlich können Senderspule und Empfängerspule auch vertauscht sein. Es hat sich jedoch gezeigt, dass das durch kleine Metallstücke im Stückgut verursachte Signal sehr klein und schwer detektierbar ist. Aus diesem Grund ist es vorteilhaft, die Empfängerspule 60 auf der obersten Metallisierungsebne der Leiterplatte 52 anzubringen, um die Sensitivität zu erhöhen. Die Empfängerspule 60 ist über einen elektrischen Anschluss 66 mit der Steuervorrichtung 22 verbunden. Die Senderspule 62 ist über einen elektrischen Anschluss 64 mit der Steuervorrichtung 22 verbunden. Die Leiterstrukturen 60, 62 der Senderspule 62 und Empfängerspule 60 folgen einer periodischen, d. h. regelmäßigen Rechtechtfunktion. Diese Rechteckfunktion ist auf einer Kreisbahn angeordnet. Die Leiterstrukturen 60, 62 sind somit sternförmig, wobei die Spitzen flach ausgebildet sind. Die Senderspule 62 und die Empfängerspule 60 sind dabei direkt übereinander, das heißt geometrisch überlappend angeordnet oder leicht zueinander verdreht und/oder verschoben. In einer Ausführungsform könnten sich die Größen der Senderspule 62 und der Empfängerspule 60 leicht unterscheiden.

Fig. 3b zeigt eine Leiterstruktur einer Spule 68, die sowohl als Senderspule 76 als auch als Empfängerspule 74 dient. Die Anordnung auf einer Leiterplatte 52 auf unterschiedlichen Metallisierungsebenen entspricht grundsätzlich der Ausführungsform zu Fig. 3a. Die Leiterstrukturen von Senderspule 76 und Empfängerspule 74 sind ebenfalls als periodische Rechteckfunktion ausgeführt. Allerdings erstrecken sie sich im Gegensatz zu Fig. 3a entlang eines Rechtecks. So kann eine Senderspule 76 und eine Empfängerspule 74 einen Großteil der Ausdehnung der Leiterplatte 52 unter dem Förderband 48 einnehmen und somit ein elektromagnetisches Feld über die gesamte Breite des Förderbandes 48 erzeugen. Die Senderspule 76 ist über einen elektrischen Anschluss 72 mit der Steuervorrichtung 22 verbunden. Die Empfängerspule 74 ist über einen elektrischen Anschluss 70 mit der Steuervorrichtung 22 verbunden.

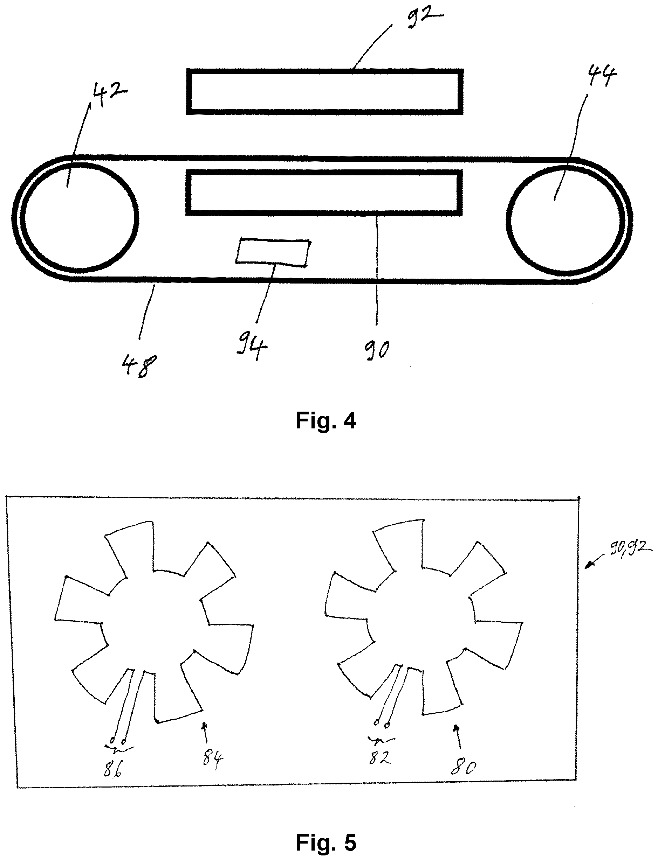

Fig. 4 zeigt ein Förderband mit integriertem Metalldetektor nach einer zweiten Ausführungsform der Erfindung. Dabei umfasst das Förderband eine erste Leiterplatte 90 innerhalb des Rahmens des Bandkörpers des Förderbandes. Zusätzlich umfasst der Metalldetektors eine zweite Leiterplatte 92 oberhalb des Obertrums des Förderbandes 48. Das auf dem Förderband 48 geförderte Stückgut wird im Bereich zwischen der ersten Leiterplatte 90 und der zweiten Patine 92 hindurchbefördert, während das Förderband 48 umlaufend um eingangsseitige und ausgangsseitige Umlenkrollen 42, 44 geführt wird. Eine Steuervorrichtung 94 ist elektrisch mit den Leiterplatten 90, 92 verbunden. Fig. 5 zeigt eine Leiterplatte 90, 92 des Metalldetektors der zweiten Ausführungsform. Wiederrum sind die Spulen 80, 84 als eine regelmäßige, d. h. periodische Rechteckfunktion ausgebildet, die wie in Fig. 5 gezeigt entlang einer Kreisbahn verläuft. Alternativ kann die Leiterstruktur der Spulen 80, 84 auch entlang eines Rechtecks oder Ovals verlaufen. Die Spulen 80, 84 sind mit den Anschlüssen 82, 86 mit der Steuervorrichtung 94 verbunden und werden elektrisch gesteuert. Dabei sind die Leiterstrukturen auf ersten Leiterplatte 90 und die zugehörigen Leiterstrukturen auf der zweiten Leiterplatte 92 (Senderspulen und Empfängerspulen) in Förderrichtung geometrisch übereinander angeordnet, so dass sie interagieren. Eine Spule 80, 84 auf der ersten Leiterplatte 90 und eine Spule 80, 84 auf der zweiten Leiterplatte 92 dienen dabei als zugehörige Senderspule und Empfängerspule. Dabei können in einer Ausführungsform alle Senderspulen auf der ersten Leiterplatte 90 und alle Empfängerspulen auf der zweiten Leiterplatte 92 angeordnet sind. Es können in einer Ausführungsform alle Senderspulen auf der zweiten Leiterplatte 92 und alle Empfängerspulen auf der ersten Leiterplatte 90 angeordnet sind. Es können auch jeweils abwechselnd auf der ersten Leiterplatte 90 Senderspulen und Empfängerspulen angeordnet sein und die zugehörigen Empfängerspulen und Senderspulen sind dann jeweils auf der zweiten Leiterplatte 92 und somit auch dort abwechselnd angeordnet.

Eine in Fig. 5 gezeigte Leiterplatte mit Leiterstrukturen in nur einer Metallisierungsebene kann auch im ersten Ausführungsbeispiel nach Fig. 2 als Leiterplatte 52 Verwendung finden. Dabei dienen die Leiterstrukturen 80, 84 als Senderspulen und Empfängerspulen. Das Sendesignal wird über den Signalgenerator die Steuervorrichtung 22 erzeugt und gepulst an die Spulen 80, 84 angelegt bzw. der Signalgenerator erzeugt ein gepulstes Wechselstromsignal. Nachdem das Sendesignal an den Spulen 80, 84 angelegt wurde, wird das Signal ausgeschaltet und das von den Spulen empfangene Signal wird ausgewertet. So dienen beide Spulen 80, 84, zeitlich versetzt als Senderspule und als Empfängerspule. Eine Entkopplung zwischen dem Sendesignal und dem Empfangssignal findet in diesem Ausführungsbeispiel nicht über eine elektrische Entkopplung der Spulen sondern über den zeitlichen Versatz statt.

Die Förderbänder mit integriertem Metalldetektor nach den Ausführungsformen nach Fig. 2 oder Fig. 4 können an der Stelle des Zuführbandes 12, des Abführbandes 16 oder des separaten Metalldetektorbandes 20 angeordnet sein und das jeweilige Band ersetzen.

Die Funktionen verschiedener in den Zeichnungen gezeigter Elemente, inklusive der Funktionsblöcke, können durch dezidierte Hardware oder durch generische Hardware, die in der Lage ist, Software auszuführen, im Zusammenhang mit der entsprechenden Software, realisiert werden. Falls die Funktionen mittels eines Prozessors zur Verfügung gestellt werden, können sie durch einen einzigen dezidierten Prozessor, einen einzigen geteilten Prozessor oder mehrere generische Prozessoren, die wiederum geteilt sein können, zur Verfügung gestellt werden. Die Funktionen können, ohne Einschränkung, durch einen digital signal processor (DSP), Netzwerk Prozessor, application specific integrated circuit (ASIC), field programmable gate array (FPGA), read only memory (ROM) mit gespeicherter Software, random access memory (RAM), und nichtflüchtige Speicher zur Verfügung gestellt werden.

## Patentansprüche

1. Förderbandwaage zum Transport von Stückgut, mit einem Zuführband (12), einem Wägeband (14) und einem Abführband (16), wobei das Wägeband (14) auf einer Wägezelle abgestützt ist, die das Gewicht von Stückgut erfasst, das über das Wägeband (14) transportiert wird, wobei die Förderbandwaage einen Metalldetektor umfasst, der mindestens eine Senderspule (54, 56) und mindestens eine Empfängerspule (54, 56) umfasst, und wobei die Förderbandwaage ein Förderband umfasst, das einen Bandkörper (46) umfasst, um den über anfangs- und endseitig montierte Umlenkrollen (42, 44) ein Förderband (48) umlaufend geführt wird, **dadurch gekennzeichnet, dass** die mindestens eine Senderspule (54, 56) und die mindestens eine Empfängerspule (54, 56) jeweils als eine planare Spule (60, 62, 74, 76, 80, 84) ausgeführt sind, die sich jeweils in einer Ebene befinden, die parallel zum Obertrum des Förderbandes und somit parallel zur Förderrichtung verläuft, und dass mindestens eine Spule des Metalldetektors in dem Bandkörper zwischen Obertrum und Untertrum des Förderbandes (48) integriert ist.

2. Förderbandwaage zum Transport von Stückgut Anspruch 1, **dadurch gekennzeichnet, dass** mindestens eine, insbesondere alle planaren Spulen (60, 62, 74, 76, 80, 84) als Leiterstrukturen auf mindestens einer Leiterplatte (52, 90, 92) ausgeführt sind.

3. Förderbandwaage zum Transport von Stückgut nach Anspruch 1 oder 2, **dadurch gekennzeichnet, dass** alle Spulen des Metalldetektors in den Bandkörper zwischen Obertrum und Untertrum des Förderbandes (48) integriert sind.

4. Förderbandwaage zum Transport von Stückgut nach Anspruch 3, **dadurch gekennzeichnet, dass** eine Empfängerspule jeweils einer Senderspule elektrisch zugeordnet ist, und die der Senderspule zugeordnete Empfängerspule auf der gleichen Leiterplatte und im Wesentlichen im gleichen geometrischen Bereich der Leiterplatte (52), jedoch auf einer anderen Metallisierungsebene, angeordnet ist.

5. Förderbandwaage zum Transport von Stückgut nach Anspruch 1 oder 2, **dadurch gekennzeichnet, dass** die Hälfte der Spulen des Metalldetektors in den Bandkörper zwischen Obertrum und Untertrum des Förderbandes (48) integriert sind und die Hälfte der Spulen des Metalldetektors oberhalb des Obertrums und mit Abstand zum Obertrum Förderbandes (48) angeordnet sind.

6. Förderbandwaage zum Transport von Stückgut nach Anspruch 5, **dadurch gekennzeichnet, dass** die Spulen, die innerhalb des Bandkörpers (46) und die Spulen, die oberhalb des Obertrums des Förderbandes (48) angeordnet sind in Transportrichtung im Wesentlichen auf gleicher Höhe angeordnet sind.

7. Förderbandwaage zum Transport von Stückgut nach Anspruch 6, **dadurch gekennzeichnet, dass** eine erste Anzahl von zwei oder mehr Spulen, insbesondere vier Spulen, im Bandkörper zwischen Obertrum und Untertrum des Förderbandes (48) angeordnet ist, und eine zweite Anzahl von Spulen, die der ersten Anzahl entspricht, oberhalb des Obertrums des Bandkörpers angeordnet ist, wobei jeder Spule im Bandkörper zwischen Obertrum und Untertrum des Förderbandes (48) eine Spule oberhalb des Obertrums des Bandkörpers elektrisch zugeordnet ist.

8. Förderbandwaage zum Transport von Stückgut nach einem der Ansprüche 1 bis 7, **dadurch gekennzeichnet, dass** Senderspulen und/oder Empfängerspulen aus ausgedehnten elektrischen Leiterstrukturen bestehen, die insbesondere kreisförmig oder rechtechtförmig angeordnet, insbesondere auf einer Leiterplatte (52, 90, 92) angeordnet, sind.

9. Förderbandwaage zum Transport von Stückgut nach Anspruch 8, **dadurch gekennzeichnet, dass** die Leiterstrukturen im Wesentlichen als eine Rechteckfunktion, insbesondere eine regelmäßige Rechteckfunktion ausgebildet sind und die Rechteckfunktion entlang einer Kreisbahn oder einer Rechteckbahn verläuft.

10. Förderbandwaage zum Transport von Stückgut nach einem der Ansprüche 1 bis 9, **dadurch gekennzeichnet, dass** der Metalldetektor einen Signalgenerator umfasst, der ein Wechselstromsignal erzeugt, welches der mindestens einen Senderspule zugeführt wird, wobei das der mindestens einen Senderspule zugeführte Wechselstromsignal ein Magnetfeld erzeugt, welches in einem zu detektierenden metallischen Gegenstand in einem Stückgut auf dem Förderband Wirbelströme induziert, und dass der Metalldetektor eine Signalauswerteeinrichtung umfasst, welche ein, durch die Wirbelströme im metallischen Gegenstand in dem Stückgut erzeugtes Magnetfeld, welches durch die Empfängerspule empfangen wird, detektiert.

11. Förderbandwaage zum Transport von Stückgut nach Anspruch 10, **dadurch gekennzeichnet, dass** der Signalgenerator ein gepulstes Wechselstromsignal erzeugt.

12. Förderbandwaage zum Transport von Stückgut nach Anspruch 11, **dadurch gekennzeichnet, dass** die Signalauswerteeinrichtung zum Zeitpunkt, in dem das gepulste Wechselstromsignal des Signalgenerators größer Null ist, keine Signalauswertung vornimmt.

13. Förderbandwaage zum Transport von Stückgut nach einem der Ansprüche 1 bis 12, **dadurch gekennzeichnet, dass** die Senderspulen und die Empfängerspulen elektrisch gegeneinander abgeschirmt sind.

14. Förderbandwaage zum Transport von Stückgut nach einem der Ansprüche 1 bis 13, **dadurch gekennzeichnet, dass** die Förderbandwaage eine Lichtschranke oder einen Abstandssensor zum Detektieren einer Verpackung im Detektionsbereich des Metalldetektors umfasst, und dass die Förderbandwaage eine Steuervorrichtung umfasst, die den Metalldetektor in einen aktiven Zustand versetzt, wenn die Lichtschranke oder der Abstandssensor ein auf der Förderbandwaage gefördertes Stückgut im Bereich des Metalldetektors erfasst.

## Claims

1. Conveyor belt scale for transporting piece goods, having an infeed belt (12), a weighing belt (14) and a discharge belt (16), wherein the weighing belt (14) is supported on a weighing cell which detects the weight of piece goods transported via the weighing belt (14), wherein the conveyor belt scale comprises a metal detector which comprises at least one transmitter coil (54, 56) and at least one receiver coil (54, 56), and wherein the conveyor belt scale comprises a conveyor belt which comprises a belt body (46) about which a conveyor belt (48) is guided in a revolving manner by way of deflection rollers (42, 44) assembled at the beginning and at the end, **characterized in that** the at least one transmitter coil (54, 56) and the at least one receiver coil (54, 56) are in each case embodied as a planar coil (60, 62, 74, 76, 80, 84) and in each case located in a plane which extends parallel to the upper lead of the conveyor belt and thus parallel to the conveying direction, and **in that** at least one coil of the metal detector is integrated in the belt body between the upper lead and the lower lead of the conveyor belt (48).

2. Conveyor belt scale for transporting piece goods according to Claim 1, **characterized in that** at least one planar coil, in particular all planar coils (60, 62, 74, 76, 80, 84), is/are designed as conductor structures on at least one printed circuit board (52, 90, 92).

3. Conveyor belt scale for transporting piece goods according to Claim 1 or 2, **characterized in that** all coils of the metal detector are integrated in the belt body between the upper lead and the lower lead of the conveyor belt (48).

4. Conveyor belt scale for transporting piece goods according to Claim 3, **characterized in that** a receiver coil is in each case electrically assigned to a transmitter coil, and the receiver coil assigned to the transmitter coil is arranged on the same printed circuit board and substantially in the same geometric region of the printed circuit board (52), but on a different metallization plane.

5. Conveyor belt scale for transporting piece goods according to Claim 1 or 2, **characterized in that** half of the coils of the metal detector are integrated in the belt body between the upper lead and the lower lead of the conveyor belt (48), and half of the coils of the metal detector are arranged above the upper lead and at a spacing from the upper lead of the conveyor belt (48).

6. Conveyor belt scale for transporting piece goods according to Claim 5, **characterized in that** the coils which are arranged within the belt body (46) and the coils which are arranged above the upper lead of the conveyor belt (48) are arranged at substantially the same level in the transport direction.

7. Conveyor belt scale for transporting piece goods according to Claim 6, **characterized in that** a first number of two or more coils, in particular four coils, are arranged in the belt body between the upper lead and the lower lead of the conveyor belt (48), and a second number of coils, corresponding to the first number, are arranged above the upper lead of the belt body, each coil in the belt body between the upper lead and the lower lead of the conveyor belt (48) being electrically assigned a coil above the upper lead of the belt body.

8. Conveyor belt scale for transporting piece goods according to one of Claims 1 to 7, **characterized in that** transmitter coils and/or receiver coils consist of extended electrical conductor structures which are arranged in particular in a circular or rectangular shape, in particular on a printed circuit board (52, 90, 92).

9. Conveyor belt scale for transporting piece goods according to Claim 8, **characterized in that** the conductor structures are substantially formed as a rectangular function, in particular a regular rectangular function and the rectangular function extends along a circular track or a rectangular track.

10. Conveyor belt scale for transporting piece goods according to one of Claims 1 to 9, **characterized in that** the metal detector comprises a signal generator which generates an alternating current signal that is supplied to the at least one transmitter coil, wherein the alternating current signal supplied to the at least one transmitter coil generates a magnetic field that induces eddy currents in a metallic object to be detected in a piece goods item on the conveyor belt, and **in that** the metal detector comprises a signal evaluation device that detects a magnetic field which is generated by the eddy currents in the metallic object in the piece goods item and is received by the receiver coil.

11. Conveyor belt scale for transporting piece goods according to Claim 10, **characterized in that** the signal generator generates a pulsed alternating current signal.

12. Conveyor belt scale for transporting piece goods according to Claim 11, **characterized in that** the signal evaluation device, at the point in time at which the pulsed alternating current signal of the signal generator is greater than zero, does not carry out a signal evaluation.

13. Conveyor belt scale for transporting piece goods according to one of Claims 1 to 12, **characterized in that** the transmitter coils and the receiver coils are electrically shielded in relation to one another.

14. Conveyor belt scale for transporting piece goods according to one of Claims 1 to 13, **characterized in that** the conveyor belt scale comprises a light barrier or a distance sensor for detecting a packaging in the detection range of the metal detector, and **in that** the conveyor belt scale comprises a control device which puts the metal detector in an active state when the light barrier or the distance sensor detects a piece goods item conveyed on the conveyor belt scale in the range of the metal detector.

## Revendications

1. Balance à bande transporteuse servant au transport de marchandises de détail, comportant une bande d'alimentation (12), une bande de pesage (14) et une bande d'évacuation (16), la bande de pesage (14) étant supportée sur une cellule de pesage qui détecte le poids des marchandises de détail qui sont transportées par la bande de pesage (14), la balance à bande transporteuse comportant un détecteur de métal qui comporte au moins une bobine émettrice (54, 56) et au moins une bobine réceptrice (54, 56), et la balance à bande transporteuse comportant une bande transporteuse qui comporte un corps de bande (46) autour duquel est guidée de manière rotative une bande transporteuse (48) par le biais de rouleaux de déviation (42, 44) montés côté début et extrémité, **caractérisée en ce que** l'au moins une bobine émettrice (54, 56) et l'au moins une bobine réceptrice (54, 56) sont réalisées respectivement sous la forme d'une bobine plane (60, 62, 74, 76, 80, 84), lesquelles se trouvent respectivement dans un plan qui s'étend parallèlement au brin supérieur de la bande transporteuse et donc parallèlement à la direction de transport, et **en ce qu'**au moins une bobine du détecteur de métal est intégrée dans le corps de bande entre le brin supérieur et le brin inférieur de la bande transporteuse (48).

2. Balance à bande transporteuse servant au transport de marchandises de détail selon la revendication 1, **caractérisée en ce qu'**au moins une, en particulier toutes les bobines planes (60, 62, 74, 76, 80, 84) sont réalisées sous forme de structures conductrices sur au moins une carte de circuit imprimé (52, 90, 92).

3. Balance à bande transporteuse servant au transport de marchandises de détail selon la revendication 1 ou 2, **caractérisée en ce que** toutes les bobines du détecteur de métal sont intégrées dans le corps de bande entre le brin supérieur et le brin inférieur de la bande transporteuse (48).

4. Balance à bande transporteuse servant au transport de marchandises de détail selon la revendication 3, **caractérisée en ce qu'**une bobine réceptrice est associée électriquement respectivement à une bobine émettrice, et la bobine réceptrice associée à la bobine émettrice est disposée sur la même carte de circuit imprimé et sensiblement dans la même région géométrique de la carte de circuit imprimé (52), mais sur un autre plan de métallisation.

5. Balance à bande transporteuse servant au transport de marchandises de détail selon la revendication 1 ou 2, **caractérisée en ce que** la moitié des bobines du détecteur de métal sont intégrées dans le corps de bande entre le brin supérieur et le brin inférieur de la bande transporteuse (48) et la moitié des bobines du détecteur de métal sont disposées au-dessus du brin supérieur et à distance du brin supérieur de la bande transporteuse (48).

6. Balance à bande transporteuse servant au transport de marchandises de détail selon la revendication 5, **caractérisée en ce que** les bobines qui sont disposées à l'intérieur du corps de bande (46) et les bobines qui sont disposées au-dessus du brin supérieur de la bande transporteuse (48) sont disposées sensiblement à la même hauteur dans la direction de transport.

7. Balance à bande transporteuse servant au transport de marchandises de détail selon la revendication 6, **caractérisée en ce qu'**un premier nombre de deux bobines ou plus, en particulier quatre bobines, sont disposées dans le corps de bande entre le brin supérieur et le brin inférieur de la bande transporteuse (48), et un deuxième nombre de bobines, qui correspond au premier nombre, est disposé au-dessus du brin supérieur du corps de bande, une bobine au-dessus du brin supérieur du corps de bande étant associée électriquement à chaque bobine dans le corps de bande entre le brin supérieur et le brin inférieur de la bande transporteuse (48).

8. Balance à bande transporteuse servant au transport de marchandises de détail selon l'une des revendications 1 à 7, **caractérisée en ce que** les bobines émettrices et/ou les bobines réceptrices sont constituées de structures conductrices électriques étendues qui sont disposées en particulier de manière circulaire ou rectangulaire, en particulier sur une carte de circuit imprimé (52, 90, 92).

9. Balance à bande transporteuse servant au transport de marchandises de détail selon la revendication 8, **caractérisée en ce que** les structures conductrices sont formées sensiblement sous la forme d'une fonction rectangulaire, en particulier d'une fonction rectangulaire régulière, et la fonction rectangulaire s'étend le long d'une trajectoire circulaire ou d'une trajectoire rectangulaire.

10. Balance à bande transporteuse servant au transport de marchandises de détail selon l'une des revendications 1 à 9, **caractérisée en ce que** le détecteur de métal comprend un générateur de signaux qui produit un signal de courant alternatif, lequel est acheminé à l'au moins une bobine émettrice, le signal de courant alternatif acheminé à l'au moins une bobine émettrice produisant un champ magnétique, lequel induit des courants de Foucault dans un objet métallique à détecter dans une marchandise de détail sur la bande transporteuse, et **en ce que** le détecteur de métal comprend un dispositif d'évaluation de signaux, lequel détecte un champ magnétique produit par les courants de Foucault dans l'objet métallique dans la marchandise de détail, lequel champ magnétique est reçu par la bobine réceptrice.

11. Balance à bande transporteuse servant au transport de marchandises de détail selon la revendication 10, **caractérisée en ce que** le générateur de signaux produit un signal de courant alternatif pulsé.

12. Balance à bande transporteuse servant au transport de marchandises de détail selon la revendication 11, **caractérisée en ce que** le dispositif d'évaluation de signaux n'effectue aucune évaluation de signaux à l'instant auquel le signal de courant alternatif pulsé du générateur de signaux est supérieur à zéro.

13. Balance à bande transporteuse servant au transport de marchandises de détail selon l'une des revendications 1 à 12, **caractérisée en ce que** les bobines émettrices et les bobines réceptrices sont blindées électriquement les unes par rapport aux autres.

14. Balance à bande transporteuse servant au transport de marchandises de détail selon l'une des revendications 1 à 13, **caractérisée en ce que** la balance à bande transporteuse comporte une barrière lumineuse ou un capteur de distance servant à la détection d'un emballage dans la région de détection du détecteur de métal, et **en ce que** la balance à bande transporteuse comporte un dispositif de commande qui met le détecteur de métal dans un état actif lorsque la barrière lumineuse ou le capteur de distance détecte une marchandise de détail transportée sur la balance à bande transporteuse dans la région du détecteur de métal.
